# EUROPÄISCHE PATENTSCHRIFT

(11) **EP 1 309 941 B1**
(45) Veröffentlichungstag und Bekanntmachung des Hinweises auf die Patenterteilung: **23.02.2005**
(21) Anmeldenummer: 01955359.3
(22) Anmeldetag: 19.07.2001
(51) Int. Cl.: G06K 19/08, G06K 19/10, G06K 19/14, G06K 19/16, G06K 19/18, B42D 15/10

(54) **OPTISCH WIRKSAME STRUKTUR ZUR PERSONALISIERUNG VON KARTEN UND DGL., SOWIE VERFAHREN ZU DEREN HERSTELLUNG**
OPTICALLY ACTIVE STRUCTURE FOR PERSONALIZING CARDS AND THE LIKE, AND METHOD FOR THE PRODUCTION THEREOF
STRUCTURE A EFFET OPTIQUE SERVANT A PERSONNALISER DES CARTES ET ANALOGUE, AINSI QUE SON PROCEDE DE REALISATION

(30) Priorität: 27.07.2000 DE 10036505
(43) Veröffentlichungstag der Anmeldung: 14.05.2003
(73) Patentinhaber: Orga Kartensysteme GmbH, 33106 Paderborn (DE); Bundesdruckerei GmbH, 10969 Berlin (DE)
(72) Erfinder: KAPPE, Frank, 33378 Rheda-Wiedenbrück (DE); PAESCHKE, Manfred Dr., 16352 Basdorf (DE); HECKER, Hermann Dr., 12159 Berlin (DE); HOCHENBLEICHER, Gerhard, 82256 Fürstenfeldbruck (DE); KLEY, Ernst-Bernhard, 07743 Jena (DE); ZÖLLNER, Karsten, 89312 Günzburg (DE)
(74) Vertreter: Tergau & Pohl Patentanwälte
(86) Internationale Anmeldenummer: PCT/EP2001/008352
(87) Internationale Veröffentlichungsnummer: WO 2002/011063

(56) Entgegenhaltungen:
- WO-A-97/19820
- US-A- 4 269 473
- US-A- 4 501 439
- US-A- 5 315 417
- US-A- 5 714 213
- US-A- 5 760 961
- US-A- 6 024 455
- PATENT ABSTRACTS OF JAPAN vol. 018, no. 621 (P-1832), 25. November 1994 (1994-11-25) & JP 06 236135 A (SEIKO EPSON CORP), 23. August 1994 (1994-08-23)

## Beschreibung

Für die Personalisierung von Datenträgem, wie z.B. Ausweiskarten oder ID-Karten, ist die Lasergravur ein etabliertes und wegen des hohen Fälschungsschutzes ein vielfach eingesetztes Verfahren. Zur weiteren Verbesserung des Fälschungsschutzes wurden schon verschiedene Verfahren vorgeschlagen.

In der US 6,024,455 ist ein retroreflektives Element offenbart, das in der Lage ist, nur bei ausgewählten Beobachtungspositionen relativ zu einer Quelle von einfallendem Licht, die Detektion eines versteckten Fenster möglich zu machen.

In den Patentschriften EP 0 216 947, EP 0 219 012 wird zum Beispiel vorgeschlagen, die Laserbeschriftung durch ein Linsenraster vorzusehen. Dadurch entsteht der Eindruck, dass die gelaserte Information nur unter dem Winkel sichtbar ist, unter welchem sie gelasert wurde. Sind unterschiedliche Richtungen verwendet worden so erscheint die gelaserte Information in der jeweiligen Richtung.

Die Nachteile dieser Erfindung sind, dass sich durch die Verwendung solcher geprägter Linsenraster nur dicke Kartenkörper verwenden lassen. Dies ist dadurch begründet, dass die verwendeten Linsenrasterabstände im Bereich zwischen 100 und 500 µm liegen. Deshalb resultiert für solche Linsenraster auch eine entsprechend große Prägetiefen im Bereich von 100 µm. Dazu kommt, dass der Laserstrahl durch die Linse fokussiert wird. Die gelaserte Information erscheint somit in einer Tiefe von einigen 100 µm. In einem dünnen Kartenaufbau, wie er zum Beispiel für Reisepassdokumente in Buchform verwendet wird, kann ein solches Sicherheitsmerkmal nicht verwendet werden.

Desweiteren scheiden auch Karten nach ISO 7810 aus, wenn diese mit einem Chipmodul versehen werden sollen. Die Kavität, die ein solches Chipmodul benötigt, hat in der Regel ein Tiefe von etwa 400-600 µm. Da das beschriebene Sicherheitsmerkmal jedoch schon transparente Schichten von einigen 100 µm benötigt, würde das Chipmodul von der Rückseite der Karte her sichtbar sein.

Ein weiterer Nachteil ist, dass die Karten während der Laserbeschriftung gekippt werden müssen, um den optisch variablen Effekt zu erzielen. Ein Kippen der Karte ist aber nur in einer der beiden vertikalen und horizontalen Richtungen der Karte sinnvoll. Daraus resultiert, dass auch der optisch variable Effekt nur in einer der beiden Richtungen möglich ist.

Die vorliegende Erfindung hat die Aufgabe, derartige Strukturen einfacher, besser lesbarer und auch für dünne Kartenaufbauten herzustellen.

Zur Lösung der gestellten Aufgabe ist die Erfindung gemäß Anspruch 1 dadurch gekennzeichnet, dass eine optische Mikrostruktur verwendet wird, die wechselseitig aus einer Gitterstruktur und einer nicht strukturierten Fläche besteht.

Der Vorteil der Erfindung liegt im übrigen in der Verbesserung der Fälschungssicherheit von Wert- und Sicherheitsdokumenten. Die Erfindung ist hierbei nicht auf eine Laserbeschriftung eines Papiersubstrats beschränkt. Vielmehr sind alle Druck- und Beschriftungsverfahren zur Herstellung und/oder Beschriftung einer Informationsschicht mit der Erfindung beansprucht.

Des weiteren sind auch andere Wert- und Sicherheitsdokumente realisierbar. Dabei wird die optisch variable Information zum Beispiel auf ein Papiersubstrat gedruckt und anschließend durch die erfindungsgemäße Struktur abgedeckt.

Wesentlich ist, dass zwei unterschiedliche Informationen unter unterschiedlichen Blickwinkeln getrennt voneinander auslesbar sind. Erreicht wird dies durch eine Mikrostruktur, die aus zueinander im wesentlichen parallelen, geraden (oder gekurvten), streifenförmigen Bereichen besteht. Diese Bereiche sind etwa gleich breit und sind zueinander abwechselnd etwa in einer Ebene angeordnet. Beide Bereiche sind durchsichtig ausgebildet, jedoch trägt der eine Bereich eine Beugungsstruktur, die bevorzugt als Gitterstruktur ausgebildet ist.

Die Beugungsstruktur ist so ausgebildet, dass die darauf auftreffende Sichtachse des menschlichen Auges seitlich abgelenkt wird und daher ausschliesslich die Information abgebildet wird, die seitlich versetzt neben der Beugungsstruktur angeordnet ist. Diese gleiche Information ist aber auch bei direkter Durchsicht durch den anderen, beugungsstrukturfreien Bereich von oben her sichtbar. In diesem Fall wird also die unter dem beugungsstrukturfreien Bereich angeordnete Information gleichzeitig sowohl bei direkter Durchsicht durch diesen Bereich, als auch bei Durchsicht durch den beugenden Bereich gleichzeitig sichtbar. Damit ergibt sich eine optimal auslesbare Information, die unter einem bestimmten Winkelbereich gut auslesbar ist.

Unter einem hiervon abweichenden Winkelbereich kann diese Information jedoch nicht mehr erkannt werden. Es wird dann vielmehr die Information sichtbar, die direkt unter dem mit der Beugungsstruktur versehenen Bereich angeordnet ist. Diese Information ist dann ebenfalls sowohl durch den freien Durchsicht-Bereich als auch durch den mit der Beugungsstruktur versehenen Bereich zusammen auslesbar.

Damit ergibt sich der Vorteil, dass beide Informationen jeweils unter verschiedenen Blickwinkeln durch beide Bereiche hindurch erkennbar sind. Die Information auf der Informationsschicht kann hierbei sowohl in schwarz-weiß als auch in jeder beliebigen Farbe vorliegen.

Neben der Herstellung und Verwendung einer derartigen Beugungsstruktur zwecks getrennter Auslesung von dualen Informationen auf einer Informationsschicht werden in der Erfindung auch die Herstellung und Verwendung sogenannter Volumentransmissionshologramme beansprucht. Zur Herstellung einer derartigen Beugungsstruktur werden in einer lichtempfindlichen Schicht zwei Strahlenfronten zur Interferenz gebracht.

Die Erfindung ist im übrigen auch nicht auf das Auslesen von dualen Informationen aus der Informationsschicht beschränkt. Es werden mit der Erfindung auch das getrennte Auslesen von mehr als zwei Informationen (insbesondere drei und mehr) beansprucht. In diesem Fall gibt es dann mehr als zwei Blickwinkel (z.B. 60 Grad und 120 Grad) auf die Mikrostruktur.

Im folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine Mikrostruktur nach der Erfindung
- Figur 2:: Vergrösserte Schnittansicht nach Figur 1
- Figur 3:: Schnitt durch einen Kartenaufbau mit Verwendung der Mikrostruktur
- Figuren 4 a bis 4 d:: Darstellung verschiedener Möglichkeiten zur Herstellung mikrostrukturierter Folien
- Figuren 5 a bis 5 c:: Weitere Möglichkeiten zur Herstellung mikrostrukturierter Folien
- Figur 6:: Draufsicht auf eine Mikrostruktur in einer ersten Ausführung
- Figur 7:: Draufsicht auf eine Mikrostruktur in einer zweiten Ausführung
- Figur 8:: Schnitt durch eine gegenüber Fig. 1 abgewandelte Ausführung einer Mikrostruktur
- Figur 9:: Schnitt durch eine weitere Abwandlung der Mikrostruktur
- Figur 10:: Schnitt durch eine weitere Ausführungsform einer Mikrostruktur mit Verwendung eines Volumenhologramms
- Figur 11:: Schnitt durch eine gegenüber Figur 10 abgewandelte Ausführung
- Figur 12 a - c:: Die Darstellung der unterschiedlich auslesbaren Informationen in Draufsicht auf die Mikrostruktur

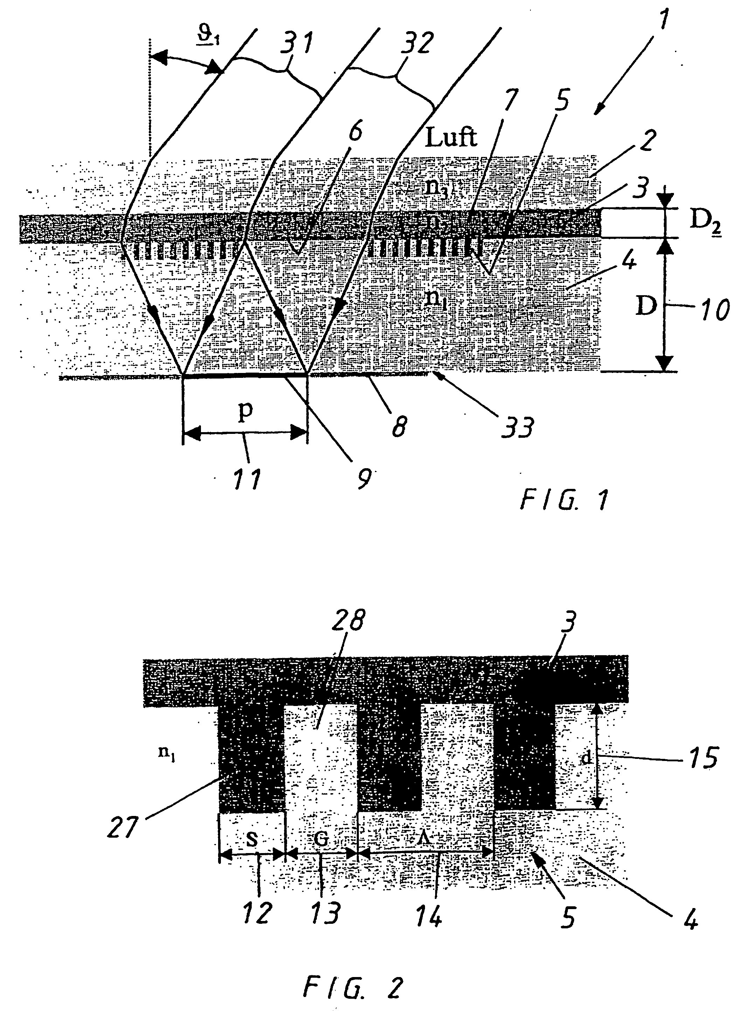

In der Figur 1 ist die erfindungsgemäß beanspruchte Mikrostruktur 1 im Schnitt dargestellt.

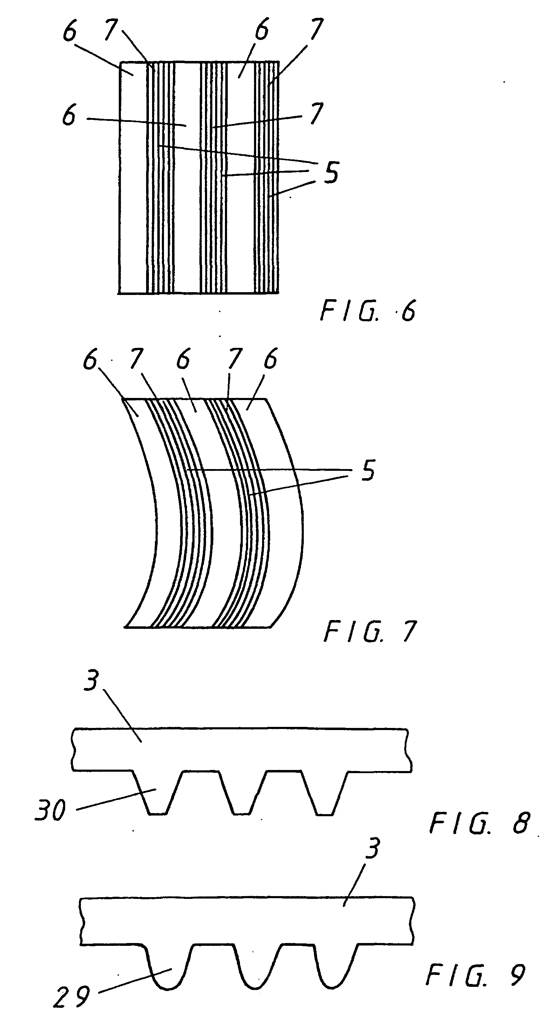

Diese Mikrostruktur besteht aus annähernd parallel zu einander angeordneten, streifenförmigen Bereichen 6, 7, die in Draufsicht siehe Fig. 6 und 7 rasterartig angeordnet sind. Die Breite der beiden Bereiche 6, 7 ist annähernd gleich ausgebildet. Geringfügige Unterschiede in der Breite sind tolerierbar und verschlechtern die Lesbarkeit der in den darunter liegenden Bereichen 8, 9 angeordneten Informationen nicht wesentlich. Diese Informationen sollen unter unterschiedlichen Blickwinkeln getrennt von einander auslesbar sein. Sie sind beispielsweise in einen Träger eingebrannt oder in anderer Form eingearbeitet oder aufgetragen. Diese Schicht wird im folgenden allgemein mit Informationsschicht 33 bezeichnet. Es können beliebige Trägermaterialien verwendet werden, welche die getrennt auslesbaren Informationen in den Bereichen 8, 9 tragen. Die oberste Schicht hat den Brechungsindex n3. Die darunter liegende Schicht 3, welche die Gitterstruktur 5 an deren Ober- und/oder Unterseite ausbildet, hat den Brechungsindex n2 und die darunter liegende Schicht 4 den Berechnungsindex n1. Darunter ist die Informationsschicht 33 angeordnet, die an ihrer Oberseite die auslesbaren Informationen trägt.

In einer besonders bevorzugten Ausführungsform besteht das Trägermaterial der Informationsschicht 33 aus PVC, PC, ABS, PET. Neben dem Schwärzen dieses Materials durch Laserstrahlung ist aber auch die farbige, laserinduzierte Beschriftung eines Trägermaterials möglich, wie sie z.B. in der Patentschrift EP 0 828 613 B1 beschrieben ist. Ebenso sind sämtliche anderen, bekannten Druck- und Auftragsverfahren möglich.

Der eine streifenförmige Bereich 6 ist möglichst gut durchsichtig gestaltet, während der andere streifenförmige Bereich 7 an seiner Unterseite (oder - nicht gezeichnet - an seiner zum Betrachter hin gewandten Oberseite oder - ebenfalls nicht gezeichnet - an beiden Seiten) eine Beugungsstruktur trägt, die bevorzugt als Gitterstruktur 5 ausgebildet ist. Bei Durchsicht durch diesen Bereich 7 kommt es zu Beugungserscheinungen, die dafür sorgen, dass der etwa halb zum Bereich 7 versetzte Bereich 9 sichtbar wird.

Betrachtet man die Mikrostruktur 1, wie in der Abbildung gezeigt, unter einem direkt senkrechten Winkel von ϑ0 dann wird das Licht an den Grenzschichten (Luft zu n3, n3 zu n2) zunächst gemäß der bekannten optischen Gesetze gebrochen. Eine solche Brechung findet auch an der Grenzschicht von n3 nach n2 statt, diese Brechung wird aber nur in dem Bereich 6 wirksam in dem keine Gitterstruktur 5 vorhanden ist. Durch die Bereiche 6 ohne Gitterstruktur 5 sieht der Betrachter also die darunter liegenden Bereiche 8, die in der Figur 1 grau dargestellt sind und die Breite dieser Gitterstruktur 5 ist mit "p" angegeben. Im Bereich der Gitterstruktur 5 wird das einfallende Licht gemäß der bekannten optischen Gesetze gebeugt.

Die Verschiebung zwischen dem Gitterraster und der Informationsschicht 33 beträgt p/2. Die Schicht mit dem Brechungsindex n2 ist optional und kann auch entfallen. Sie dient vor allem der Glättung der Oberfläche der Mikrostruktur und beseitigt auch schlechte Stellen im Durchlass-Spektrum. Die Dicke 10 des Parameters D kann auch gegen Null gehen. Es kann die Schicht 4 auch vollständig entfallen.

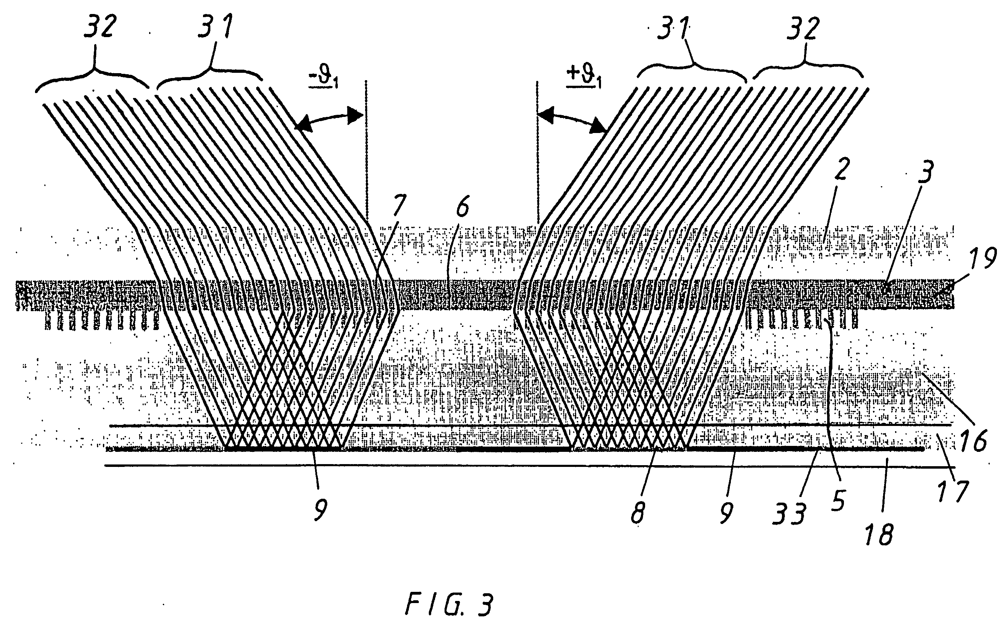

Durch geeignete Wahl der Parameter für eine solche Gitterstruktur 5 kann erreicht werden, dass ein großer Teil des einfallenden Lichtes in der Richtung gebeugt wird in dem sich der Bereich 8 der in der Figur 1 grau dargestellten Information befindet. Somit ist sichergestellt, dass unter dem Betrachtungswinkel ϑ₁ nur die Information im grau dargestellten Bereich 8 beobachtet werden kann. Sieht der Betrachter allerdings unter dem Winkel ϑ₁ (Winkel symmetrisch zum Lot) auf die Struktur, so kann der Betrachter durch beide Bereiche 6, 7 hindurch nur die in der Figur 3 schwarz dargestellten Bereiche 9 beobachten.

In Figur 2 sind die Parameter für die optisch wirksame Struktur dargestellt. Die Erfindung sieht hierbei auch den Einsatz eines binären Gitters vor.

Als Entwurfsparameter für ein solches Gitter ergeben sich die Brechzahlen n₁ und n₂ und die geometrischen Gittergrößen, wie Gitterperiode 14 (Λ), Stegbreite 12 (S), Stegabstand G und Gittertiefe d. Als weiterer Entwurfsparameter muss der Abstand 10 zwischen der optisch wirksamen Mikrostruktur 5 und der (im Bereich 8) gelaserten Information D angegeben werden (siehe die nachfolgende Tabelle 1

**Tabelle 1:**

| Beispielhafte Designparameter für die Mikrostruktur mit n1 = n3 | | | | | |
|---|---|---|---|---|---|
| # | Parameter | | Entwurf 1 | Entwurf 2 | Entwurf 3 |
| 10 | Schichtdicke mit n₁ | D [µm] | 250 | 250 | 1500 |
| 11 | Pixelgröße | p [µm] | 113,7 | 90,0 | 555,6 |
| - | Ein-/Ausfallswinkel | in Luft [Grd] | ±19,42 | ±15,43 | ±15,43 |
| | | in n₁ [Grd] | ±12,81 | ±10,21 | ±15,43 |
| 4 | Brechzahlen | n₁ | 1,5 | 1,5 | 1,0 |
| 3 | | n₂ | 1,9 | 1,0 | 1,46 |
| 14 | Gitterperiode | Λ [nm] | 800 | 1000 | 1000 |
| 12 | Stegbreite (n₂) | S [nm] | 200 | 800 | 200 |
| 15 | Gittertiefe | d [nm] | 1080 | 1060 | 1045 |
| 7 | Effizienz des Gitters | TE [%] | 89,29 | 71,64 | 86,20 |
| | | TM [%] | 88,00 | 87,84 | 80,46 |
| | | ⌀ [%] | 88,64 | 79,74 | 83,33 |
| 6 | Effizienz der gitterfreien Bereiche | [%] | 98,62 | 100,00 | 96,49 |
| - | Gesamteffizienz | [%] | 93,63 | 89,87 | 89,91 |

In der Tabelle 1 sind beispielhaft einige Entwurfsmöglichkeiten für die erfindungsgemäß beanspruchte Gitterstruktur 5 angegeben.

In der letzten Zeile der oben angegebenen Tabelle ist die Effizienz aufgelistet. Sie gibt an, wie viel von der (z.B. gelaserten) Information unter dem Betrachtungswinkel ϑ₀ zu sehen ist. Angegeben sind die Werte sowohl für TE als auch für TM polarisiertes Licht. Für die Bereiche 6 ohne Gitter 5 sind nur die Fresnelverluste durch Reflexion an den Grenzflächen berücksichtigt. Die Bereiche 7 mit Gitter 5 berücksichtigen hingegen auch die Effizienz der Beugung (Beugungswirkungsgrad).

Die Effizienz der gesamten Struktur ist für den hier dargestellten Fall so zu entwerfen, dass sie bei 90% oder höher liegt.

In Figur 3 ist der Kartenaufbau 1 schematisch dargestellt. Die Karte wird aus laminierfähigen Folien 16-18 mit unterschiedlichen Eigenschaften aufgebaut. Die Folien 16-18 unterscheiden sich durch ihre Transparenz und ihre Fähigkeit durch Laserstrahlung markierbar zu sein. Der optische Effekt wird erfindungsgemäß durch eine hologrammähnliche, mikrostrukturierte Folie 19 realisiert, die anschließend an den Laserpersonalisierungsprozess auf den Kartenkörper bestehend aus den Folien 16-18 aufgebracht wird. Dieses Verfahren ist vorzuziehen, da in diesem Falle ein Kippen der Karte 1 während der Personalisierung nicht notwendig ist. Es wird aber ebenfalls beansprucht, dass ein solches Kippen während der Personalisierung möglich ist und die Laserpersonalisierung anschließend an das Aufbringen der Folie 19 geschieht.

Für den Fall, dass die erfindungsgemäß hologrammähnlich Folie 19 eingesetzt wird, kann diese Folie 19 mit einer herkömmlichen Heißprägevorrichtung auf den Kartenkörper der Folien 16-18 übertragen werden.

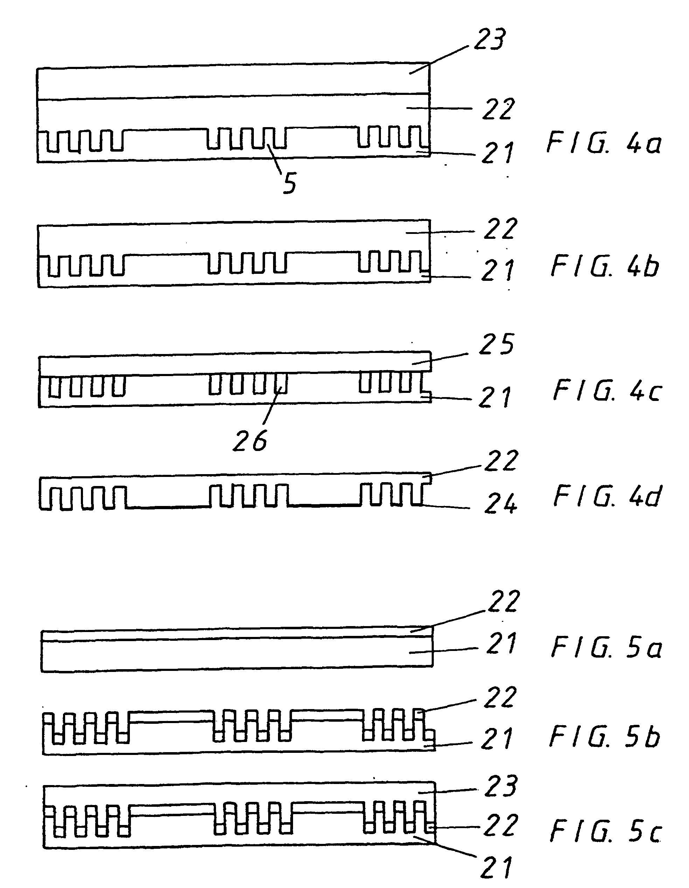

Für die hologrammähnliche Folie 19 bestehen verschiedene Realisierungsmöglichkeiten die anhand der Figuren 4 und 5 diskutiert werden.

Es sind zwei zu einander parallele Strahlenbündel 31, 32 dargestellt, von denen das eine durch den freien Bereich 7 und das andere durch die Gitterstruktur 5 verläuft. Aufgrund der unterschiedlichen Beugung der beiden Strahlenbündel wird unter dem Betrachtungswinkel ± ϑ₁ jeweils der Bereich 9 sowohl durch den Durchsichtsbereich 6 als auch durch den Gitterstrukturbereich 7 von oben her sichtbar.

Die Figuren 4 und 5 zeigen verschiedene Herstellungsverfahren für die Herstellung einer solchen Mikrostruktur.

Zur Herstellung der in Figur 4 dargestellten Schichten ist es notwendig wie auch für die Herstellung herkömmlicher Hologrammfolien einen Prägestempel zu fertigen. Dieser Prägestempel kann beispielsweise dadurch entstehen, dass eine durch Elektronenstrahlbelichtung hergestellte Maske auf ein Nickelsubstrat übertragen wird. Dieses Nickelsubstrat dient dann in der Folge als Stempel für die Prägungen in die Folie 19 bzw. in den stattdessen verwendeten Prägelack.

Zur Herstellung des in Figur 4a dargestellten Schichtenaufbaus wird zunächst das binäre Gitter 5, mittels des erwähnten Stempels, in das Material 21 geprägt. Das Material 21 kann aus einer Folie, aber auch aus einem Lack bestehen, der z.B. mittels ultravioletten Lichtes aushärtbar ist. In der Regel besitzt dieses Material einen niedrigen Brechungsindex n₁≅1,5. Diese Prägung wird in einem zweiten Arbeitsgang (Fig. 4 b) durch eine Schicht (Material 22) mit dem Brechungsindex n2 so abgedeckt, dass die Gräben der Gitterstruktur 5 gleichmäßig gefüllt und eine möglichst glatte Oberfläche entstanden ist. Eine solche Einebnung ist möglich indem ein niedrigviskoser Lack auf die geprägte Mikrostruktur 5 aufgebracht wird.

Es ist notwendig, dass die schmalen, tiefen Gräben von dem Lack vollständig gefüllt sind.

Eine weitere Möglichkeit der Einebnung besteht durch das Beschichten der geprägten Mikrostruktur 5 mittels einer dielektrischen Schicht. Eine solche Schicht (Material 25 gemäß Fig. 4 c) kann durch Beschichtungsverfahren wie das Aufdampfen oder Sputtern hergestellt werden.

In beiden Fällen, Lack- oder dielektrischer Beschichtung, ist es notwendig, dass der Brechungsindex des Abdeckmaterials möglichst verschieden vom Brechungsindex des Materials mit der geprägten Struktur ist. In der Regel ist der Brechungsindex für dieses Material höher als der Brechungsindex für das Material 21 in das die Mikrostruktur 5 geprägt wurde.

Mit der Lackvariante stehen derzeit Brechungsindices bis maximal n₂=2,0 zur Verfügung. Dielektrische Materialien 25 stehen auch mit einem höheren Brechungsindex zur Verfügung. Typische Materialen wären z.B. ZnS und Zirkonoxid.

Zum Schutz des Schichtenaufbaus kann die Schicht "Material 22" zusätzlich mit einer Schicht "Material 23" versehen werden (siehe Fig. 4 a). Auf diese Schicht kann aber auch verzichtet werden, falls die Schicht "Material 22" genügend Schutz vor Verkratzen bietet (siehe Fig. 4 b).

Eine weitere Variante nach Figur 4 c besteht aber auch, indem man, anstatt des niedrigviskosen Lackes, einen Lack (Material 25) verwendet, der nicht in die schmalen Gräben der geprägten Mikrostruktur 5 eindringt. In diesem Fall wird die Luft, die sich in den Gräben befindet durch den Lack eingeschlossen und versiegelt. So entsteht in dem Aufbau Kammern 26 mit dem Brechungsindex von n₂=1,0, wie in Figur 4 c dargestellt ist.

Es kann auch genügen, die Schicht (Material 22) mit der geprägten Mikrostruktur 5 mit einem Klebstoffsystem 24 in der Weise zu versehen, wie in Figur 4 d dargestellt ist. Bei dem Klebstoffsystem kann es sich z.B. um einen thermoplastischen Schmelzklebstoff oder um einen thermisch härtenden Klebstoff handeln. Dann kann die Mikrostruktur 5 ohne weitere Schicht auskommen und wird direkt auch den Kartenkörper appliziert.

Ein weiterer möglicher Schichtaufbau der hologrammähnlichen Folie 19 ist in Figur 5 dargestellt. Zur Herstellung wird in eine, mit einer dielektrischen Schicht, beschichteten Folie (Figur 5 a) mit Hilfe des Prägestempels die Mikrostruktur übertragen (siehe Figur 5 b). Anschließend wird diese mit einem Lack versiegelt (siehe Figur 5 c). Die dielektrische Schicht (Material 22) besitzt in der Regel einen höheren Brechungsindex als das ihn umgebenden Material. Der Brechungsindex der dielektrischen Schicht kann z.B. n₂ betragen. Das umgebende Material 21 bzw. Material 23 besitzt in der Regel den gleichen Brechungsindex n₁=n₃≅1,5.

Ein solcher Schichtaufbau hat im Gegensatz zu den zuvor erläuterten Folien den Vorteil, dass sich die Ausgangsfolie leichter herstellen lässt. Das Beschichten einer nicht ebenen Mikrostruktur 5 ist im Allgemeinen schwierig und ein homogener, einebnender Auftrag ist schwer möglich. Glatte Folien mit einer gleichmäßigen, dielektrischen Schicht zu versehen ist hingegen Stand der Technik.

Die Figuren 8 und 9 zeigen weitere, mögliche Ausführungsbeispiele einer Gitterstruktur 5. Hierbei ist gezeigt, dass das Profil der Stegelemente 30 nicht notwendigerweise rechteckförmig sein muss. Es wird zwar eine Rechteckform wegen der optimalen Ausnutzung des Bragg-Effektes bevorzugt. Dieser Effekt ist bei einem binären Rechteckprofil am deutlichsten ausgeprägt.

Die Erfindung ist hierauf jedoch nicht beschränkt. Als Profilform für die Stegelemente 29 oder 30 kommen deshalb auch vom Rechteckprofil abweichende Profilformen zur Anwendung. Figur 8 zeigt hierbei ein etwa trapezförmiges Stegelement 30, während Figur 9 ein halbrundes, elliptisches oder ovales Stegelement 29 zeigt. Es wurde bereits auch schon darauf hingewiesen, dass sich die Gitterstruktur nicht notwendigerweise an der Unterseite der Schicht 3 befinden muss. Sie kann auch an deren Oberseite oder auf beiden Seiten angeordnet sein.

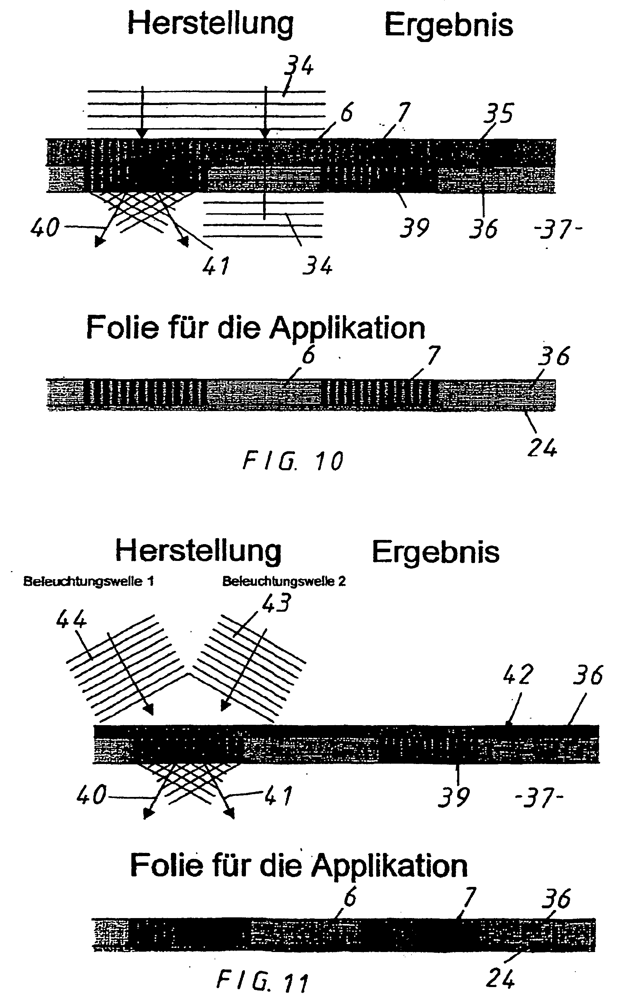

Eine weitere Möglichkeit die erfindungsgemäße hologrammähnliche Folie 19 zu realisieren ist in Figur 10 und Figur 11 dargestellt. In diesen Fällen ist die Folie 19 durch ein Volumentransmissionshologramm definiert. Bei diesem Herstellungsverfahren handelt es sich um eine gegenüber den Figuren 4a-d) bzw. 5a-c) geänderte Herstellung der hologramm-ähnlichen Folie 19. Diese neuartige Folie besitzt die gleichen optischen Eigenschaften wie in Fig. 1 und Fig. 3 dargestellt.

Volumentransmissionshologramme entstehen, wenn in einer lichtempfindlichen Schicht zwei Strahlen zur Interferenz gebracht werden. In der lichtempfindlichen Schicht wird in den Bereichen der konstruktiven Interferenz der Brechungsindex des Materials geändert. Ein solches, sogenanntes Photopolymere ist der "holographic recording film" der Firma DuPont.

Eine Realisierungsmöglichkeit ist in Figur 10 dargestellt. In diesem Fall werden notwendige Interferenzmuster durch die Beugung der ebenen monochromatischen Beleuchtungswelle an einer Phasenmaske erzeugt.

Eine Phasenmaske ändert die Phasenlage einer Beleuchtungswelle. Dies wird durch die optische Wegdifferenz erreicht den die Beleuchtungswelle durch eine solche Maske erfährt. Der optische Weg durch den grau dargestellten Bereich der Phasenmaske ist verschieden von dem umgebenden Bereich der Maske. Der optische Weg ist eine Multiplikation von Brechungsindex und des geometrischen Weges durch die Maske. Die optische Wegdifferenz kann somit sowohl durch eine Modulation des Brechungsindexes, einer geänderten Geometrie oder ein Kombination aus beiden erzeugt werden.

Im Bereich des Phasengitters wird die Beleuchtungswelle in die 1. bzw. -1. Ordnung gebeugt. Die beiden Wellenfronten der 1. und -1. Ordnung kommen im Bereich einer Dichromatgelatine (bevorzugt ein Photopolymer-Material) zur Interferenz. Im rechten Teil der Skizze ist das aus der Interferenz der Wellenfronten entstandene Brechungsindexmuster dargestellt. Im Bereich, in dem keine Phasenmaske vorhanden ist, durchdringt die Beleuchtungswelle das Photopolymere ohne die Bildung eines Interferenzmusters. Auf diese Weise entsteht im Photopolymere abwechselnd ein Bereich 7 mit einer Brechzahlmodulation und ein Bereich 6 ohne Brechzahlmodulation, wie im rechten Teil der Figur 10 dargestellt ist.

Eine solche Phasenmaske lässt sich erzeugen, in dem man ein binäres Gitter in ein Glassubstrat ätzt. Der Gang- oder Phasenunterschied für die Beleuchtungswelle wird dann durch die unterschiedliche optische Weglänge durch das Phasengitter erzeugt.

Eine weitere Realisierung des Volumentransmissionshologramms ist in Figur 11 dargestellt. In diesem Fall treffen zwei Beleuchtungswellen unter einem Winkel auf das Photopolymer.

Die Eigenschaft dieses Materials ist seinen Brechungsindex unter dem Einfluss von Licht zu verändem. Eine Belichtung durch ein interferenzmuster bildet dieses nach der Entwicklung als Modulation des Brechungsindexes ab.

Dort bildet sich demzufolge ein Interferenzmuster aus und durch diese Belichtung entsteht auch dort ein entsprechendes Brechungsindexmuster. Die Bereiche die erfindungsgemäß keine Gitterstruktur aufweisen sollen werden durch eine Amplitudenmaske abgedeckt.

Eine Amplitudenmaske lässt die Beleuchtung des Photopolymers nur in den transparenten Bereichen (in der Zeichnung grau dargestellt) zu. In den anderen Bereichen ist die Maske undurchsichtig (in der Zeichnung schwarz dargestellt). So entstehen wie im rechten Teil der Figur 11 dargestellt ebenfalls Bereiche mit und ohne Brechungsindexmodulation.

Der Unterschied zwischen Phasenmaske und Amplitudenmaske besteht nur in deren Herstellung. Das Ergebnis ist in beiden Fällen nahezu identisch. Für die Phasenmaske benötigt man nur eine kohärente Beleuchtungswelle um das Interferenzmuster zu erzeugen. Bei der Amplitudenmaske sind zwei kohärente Beleuchtungswellen notwendig. Allerdings ist die Phasenmaske in ihrer Herstellung komplizierter als die Amplitudenmaske

Amplitudenmasken werden photolithographisch oder durch Elektronenstrahlbelichtung hergestellt. Phasenmasken können z.B. durch Ätzen eines binären Gitters hergestellt werden.
Die Amplitudenmaske lässt die Beleuchtungswellen nur in den transparenten Bereichen durch.
Die Phasenmaske beugt das Licht in den Bereichen des binären Gitters. Das dadurch erzeugte gebeugte Licht interferiert.
Die transparenten, bzw. nicht transparenten Bereiche des Amplitudengitters aber auch die Bereiche mit Phasengitter bzw. die Bereiche ohne Phasengitter der Phasenmaske entsprechen den Bereich 6 bzw. 7 aus der Fig. 1 bzw. Fig. 3.

In beiden Fällen kann ein so hergestelltes Volumentransmissionshologramm ebenfalls als erfindungsgemäß beanspruchte Folie 19 verwendet werden. Das Volumentransmissionshologramm ist vor oder nach der Personalisierung mittels eines Klebstoffsystems auf den Informationsträger aufzubringen.

Für die Grössenordnung des binären Gitters der Phasen- und Amplitudenmaske gelten die gleichen Grössenangaben, wie sie anhand der Tabelle 1 angegeben wurden.

In den Figuren 10 und 11 ist keine Trägerfolie mehr vorgesehen. Vielmehr das Photopolymere mit einem Klebstoffsystem dargestellt, das benötigt wird, um die Folie auf den Kartenkörper zu applizieren. Nach der Applikation ist die Wirkungsweise der Folie genauso wie in Fig. 1 bzw. Fig. 3 dargestellt.

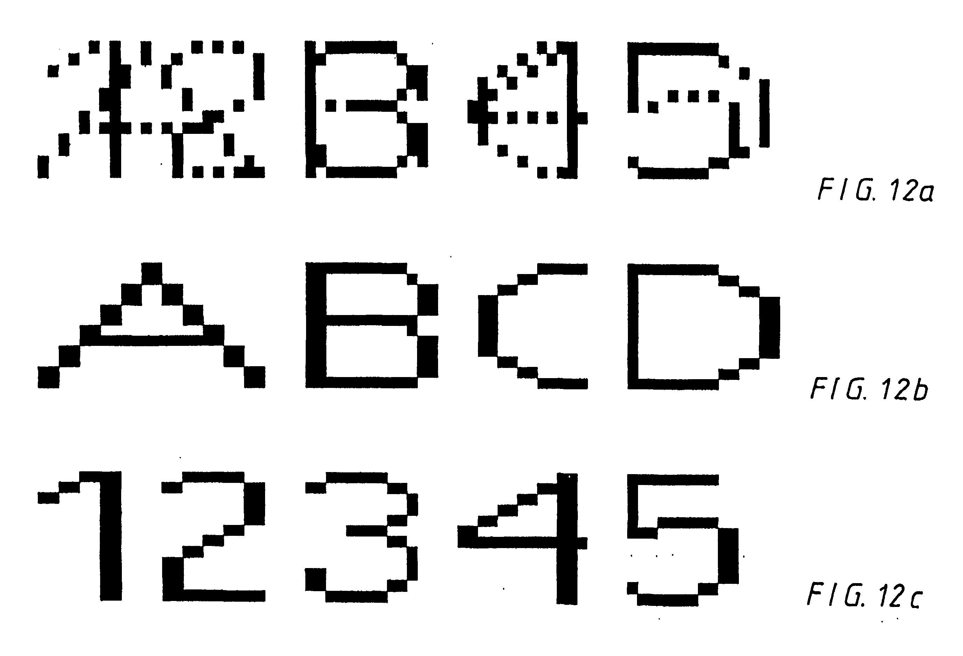

Die Figur 12 zeigt in der Draufsicht die Darstellung der binären Information und deren Auslesung. Während Fig. 12 a eine unter einem unbestimmten Blickwinkel definierte Draufsicht zeigt, bei der beide Informationen in einander vermischt sind, zeigt Fig. 12 b die Darstellung der einen Information unter einem bestimmten, definierten Blickwinkel, während die Figur 12 c die Darstellung der anderen Information unter einem davon abweichenden, zweiten Blickwinkel zeigt.

Es ist im übrigen im allgemeinen Beschreibungsteil dargestellt, dass insgesamt auch drei oder mehr Informationen auf der Informationsschicht 33 angeordnet werden können. In diesem Fall würde unter einem definierten, dritten Betrachtungswinkel die dritte Information - getrennt von den beiden anderen Informationen der Figuren 12 b und c - auslesbar sein.

### Zeichnungslegende

- 1.: Kartenaufbau
- 2.: Schicht
- 3.: Schicht
- 4.: Schicht
- 5.: Gitterstruktur
- 6.: Bereich (ohne Gitterstruktur)
- 7.: Bereich (mit Gitterstruktur)
- 8.: Bereich (grau)
- 9.: Bereich (schwarz)
- 10.: Abstand (D) Dicke
- 11.: Breite (p)
- 12.: Stegbreite (S)
- 13.: Stegabstand (G)
- 14.: Gitterperiode (Λ)
- 15.: Gittertiefe (d)
- 16.: Folie
- 17.: Folie
- 18.: Folie
- 19.: mikrostrukturierte Folie
- 20.: Material
- 21.: " "
- 22.: " "
- 23.: " "
- 24.: Klebstoffsystem
- 25.: Material
- 26.: Kammer
- 27.: Stegelement
- 28.: Zwischenraum
- 29.: Stegelement
- 30.: Stegelement
- 31.: Strahlenbündel
- 32.: Strahlenbündel
- 33.: Informationsschicht
- 34.: Beleuchtungswelle
- 35.: Phasenmaske
- 36.: Dichromatgelatine
- 37.: Trägersubstanz
- 38.: Gitterstruktur
- 39.: Gitterstruktur
- 40.: Wellenfront
- 41.: Wellenfront
- 42.: Amplitudenmaske
- 43.: Beleuchtungswelle
- 44.: Beleuchtungswelle

## Patentansprüche

1. Sicherheitsmerkmal mit einer Struktur aus einer optisch wirksamen Mikrostruktur (1) und einer darunter angeordneten Infomzationsstruktur (33), bei dem Informationen als irreversible Veränderungen in die Informationsstruktur (33) eingebracht sind und die Mikrostruktur (1) mindestens einen ersten (7) und einen zweiten (6) durchsichtig ausgebildeten Mikrostruktur-Bereich aufweist, wobei der erste Mikrostruktur-Bereich (7) eine Beugungsstruktur (5) trägt und der zweite Mikrostruktur-Bereich (6) beugungsstrukturfrei ist, und die Struktur eine Effizienz aufweist, die angibt, wieviel von der Information in der Informationsstruktur (33) unter einem optimalen Blickwinkel (+ϑ₁, -ϑ₁) durch die optisch wirksame Mikrostruktur (1) zu sehen ist,
**dadurch gekennzeichnet, dass**
die Effizienz größer oder gleich 90% ist, und die Informationen aus verschiedenen Blickwinkeln (+ϑ₁, -ϑ₁) auf das Sicherheitsmerkmal einen unterschiedlichen Informationsgehalt (Fig. 12a, Fig. 12b, Fig. 12c) aufweisen, wobei verschiedene Informationen jeweils in verschiedenen Informationsstruktur-Bereichen (8, 9) in der Informationsstruktur (33) eingebracht sind, wobei ein erster Informationsstruktur-Bereich (8) einem ersten Informationsgehalt (Fig. 12b) und einem ersten Blickwinkel (+ϑ₁) zugeordnet ist und ein zweiter Informationsstruktur-Bereich (9) einem zweiten Informationsgehalt (Fig. 12c) und einem zweiten Blickwinkel (-ϑ₁) zugeordnet ist.

2. Sicherheitsmerkmal nach Anspruch 1,
**dadurch gekennzeichnet, dass**
sich die Effizienz im wesentlichen unter Berücksichtigung von Lichtreflexion an Grenzflächen und einem Beugungswirkungsgrad des ersten, eine Beugungsstruktur (5) tragenden Mikrostruktur-Bereichs (7) ergibt.

3. Sicherheitsmerkmal nach Anspruch 1 oder 2,
**dadurch gekennzeichnet, dass**
die Informationsstruktur (33) aus mehreren übereinander angeordneten Folien (16, 17, 18, 19) gebildet ist.

4. Sicherheitsmerkmal nach einem der Ansprüche 1 bis 3,
**dadurch gekennzeichnet, dass**
die optisch wirksame Mikrostruktur (1) eine hologrammähnliche Folie (19) aufweist.

5. Sicherheitsmerkmal nach Anspruch 3 oder 4,
**dadurch gekennzeichnet, dass**
die Informationen in mindestens eine der Folien (16, 17, 18, 19) eingebracht ist.

6. Sicherheitsmerkmal nach einem der Ansprüche 1 bis 5,
**dadurch gekennzeichnet, dass**
der erste Mikrostruktur-Bereich (7) und der zweite Mikrostruktur-Bereich (6) streifenförmig aneinander angrenzend angeordnet sind.

7. Sicherheitsmerkmal nach einem der Ansprüche 1 bis 6,
**dadurch gekennzeichnet, dass**
der erste und zweite Mikrostruktur-Bereich (7, 6) und der erste und zweite Informationsstruktur-Bereich (8, 9) alle die gleiche Breite (p) aufweisen und die Informationsstruktur-Bereiche (8, 9) gegen die Mikrostruktur-Bereiche (7, 6) um die halbe Breite (p/2) versetzt sind.

8. Sicherheitsmerkmal nach Anspruch 7,
**dadurch gekennzeichnet, dass**
die Breite (p) bei 45,5µm liegt.

9. Sicherheitsmerkmal nach einem der Ansprüche 1 bis 8,
**dadurch gekennzeichnet, dass**
zwischen der Mikrostruktur (1) und der Informationsstruktur (33) eine Schicht angeordnet ist, deren Dicke (D,10) bei 100µm liegt.

10. Sicherheitsmerkmal nach einem der Ansprüche 1 bis 9,
**dadurch gekennzeichnet, dass**
die Beugungsstruktur (5) in Form einer Gitterstruktur gebildet ist.

11. Sicherheitsmerkmal nach Anspruch 10,
**dadurch gekennzeichnet, dass**
die Gitterstruktur in Form von kammartig mit Zwischenräumen (26, 28) voneinander beabstandeten und zueinander parallelen Stegelementen (27) gebildet ist.

12. Sicherheitsmerkmal nach Anspruch 10 oder 11,
**dadurch gekennzeichnet, dass**
ein Querschnitt eines Stegelementes (27, 29, 30) ausgebildet ist, gemäß einer Form aus der Gruppe bestehend aus: Rechteckform, Sinusform, Ellipsenform, Ovalform und Sägezahnform.

13. Datenträger mit einem Sicherheitsmerkmal nach einem der Ansprüche 1 bis 12.

14. Verfahren zur Herstellung eines Datenträgers mit einem Sicherheitsmerkmal nach einem der Ansprüche 1 bis 12, bei dem
- eine Struktur aus einer optisch wirksamen Mikrostruktur (1) und einer darunter angeordneten Informationsstruktur (33) gebildet wird, und wobei
- bei der Mikrostruktur (1) mindestens ein erster (7) und ein zweiter (6) Mikrostruktur-Bereich durchsichtig ausgebildet werden, wobei der erste Mikrostruktur-Bereich (7) mit einer Beugungsstruktur (5) versehen wird und der zweite Mikrostruktur-Bereich (6) beugungsstrukturfrei bleibt,
**dadurch gekennzeichnet, dass**
- verschiedene Informationen als irreversible Veränderungen mittels Lasergravur jeweils in verschiedene Informationsstruktur-Bereiche (8, 9) in die Informationsstruktur (33) eingebracht werden, wobei
- ein erster Informationsstruktur-Bereich (8) einem ersten Informationsgehalt (Fig. 12b) und einem ersten Blickwinkel (+ϑ₁) zugeordnet ist und ein zweiter Informationsstruktur-Bereich (9) einem zweiten Informationsgehalt (Fig. 12c) und einem zweiten Blickwinkel (-ϑ₁) zugeordnet ist, und
- eine Materialschicht (21) auf die Informationsstruktur (33) aufgebracht wird,
- die Beugungsstruktur (5) mittels eines Prägestempels in die Materialschicht (21) eingeprägt wird, und
- die Materialschicht (21) mit der Beugungsstruktur (5) durch eine Schicht (22) derart abgedeckt wird, daß eine glatte Oberfläche gebildet wird, wobei
- die Struktur mit einer Effizienz von größer oder gleich 90% gebildet wird, weiche angibt, wieviel von der Information in der Informationsstruktur (33) unter einem optimalen Blickwinkel (+ϑ₁, -ϑ₁) durch die optisch wirksame Mikrostruktur (1) zu sehen ist, und
- die Informationen aus verschiedenen Blickwinkeln (+ϑ₁, -ϑ₁) auf das Sicherheitsmerkmal einen unterschiedlichen Informationsgehalt (Fig. 12a, Fig. 12b, Fig. 12c) aufweisen.

15. Herstellungsverfahren nach Anspruch 14,
**dadurch gekennzeichnet, dass**
die Schicht (22) einen Brechungsindex (n₂) aufweist, der sich vom Brechungsindex (n₁) der Materialschicht (21) unterscheidet.

16. Herstellungsverfahren nach Anspruch 14 oder 15,
**dadurch gekennzeichnet, dass**
die Beugungsstruktur (5) mittels einer Heißprägevorrichtung eingeprägt wird.

17. Herstellungsverfahren nach Anspruch 14 oder 15,
**dadurch gekennzeichnet, dass**
die Materialschicht (21) als eine hologrammähnliche Folie (19) ausgebildet ist.

18. Herstellungsverfahren nach Anspruch 14 oder 15,
**dadurch gekennzeichnet, dass**
die Materialschicht (21) als ein UV-härtbarer Lack ausgebildet ist.

19. Herstellungsverfahren nach einem der Ansprüche 14 bis 18,
**dadurch gekennzeichnet, dass**
die Schicht (22) als ein niedrigviskoser Lack ausgebildet ist, derart, daß die geprägten Gräben in der Materialschicht (21) gefüllt werden.

20. Herstellungsverfahren nach einem der Ansprüche 14 bis 19,
**dadurch gekennzeichnet, dass**
die Schicht (22) als eine dielektrische Schicht ausgebildet ist.

21. Herstellungsverfahren nach einem der Ansprüche 14 bis 18,
**dadurch gekennzeichnet, dass**
die Schicht (22) als ein Lack oder Klebstoffsystem (24) ausgebildet ist derart, daß die geprägten Gräben in der Materialschicht (21) frei bleiben und versiegelt werden.

22. Herstellungsverfahren nach einem der Ansprüche 14 bis 21,
**dadurch gekennzeichnet, dass**
die Materialschicht (21) vor einem Prägen bereits mit einer weiteren dielektrischen Schicht (22a) versehen ist.

23. Verfahren zur Herstellung eines Datenträgers mit einem Sicherheitsmerkmal nach einem der Ansprüche 1 bis 10, bei dem
- eine Struktur aus einer optisch wirksamen Mikrostruktur (1) und einer darunter angeordneten Informationsstruktur (33) gebildet wird, und wobei
- bei der Mikrostruktur (1) mindestens ein erster (7) und ein zweiter (6) Mikrostruktur-Bereich durchsichtig ausgebildet werden, wobei der erste Mikrostruktur-Bereich (7) mit einer Beugungsstruktur (5) versehen wird und der zweite Mikrostruktur-Bereich (6) beugungsstrukturfrei bleibt,
**dadurch gekennzeichnet, dass**
- verschiedene Informationen als irreversible Veränderungen mittels Lasergravur jeweils in verschiedene Informationsstruktur-Bereiche (8, 9) in die Informationsstruktur (33) eingebracht werden, wobei
- ein erster Informationsstruktur-Bereich (8) einem ersten Informationsgehalt (Fig 12b) und einem ersten Blickwinkel (+ϑ₁) zugeordnet ist und ein zweiter Informationsstruktur-Bereich (9) einem zweiten Informationsgehalt (Fig. 12c) und einem zweiten Blickwinkel (-ϑ₁) zugeordnet ist, und
- die Beugungsstruktur (5) als ein Volumentransmissionshologramm in eine Materialschicht (21) eingebracht wird, indem die Materialschicht (21) als eine lichtempfindliche Schicht ausgebildet ist und in der Materialschicht (21) eine erste und zweite Beleuchtungswelle zur Interferenz gebracht werden, derart, daß in Bereichen der konstruktiven Interferenz der Beleuchtungswellen ein Brechungsindex der Materialschicht (21) geändert wird, so dass die entstehende Brechzahlmodulation die Beugungsstruktur (5) bildet, und
- die Materialschicht (21) auf die Informationsstruktur (33) vor oder nach Einbringen der Beugungsstruktur (5) aufgebracht wird, wobei
- die Struktur mit einer Effizienz von größer oder gleich 90% gebildet wird, welche angibt, wieviel von der Information in der Informationsstruktur (33) unter einem optimalen Blickwinkel (+ϑ₁, -ϑ₁) durch die optisch wirksame Mikrostruktur (1) zu sehen ist, und
- die Informationen aus verschiedenen Blickwinkeln (+ϑ₁, -ϑ₁) auf das Sicherheitsmerkmal einen unterschiedlichen Informationsgehalt (Fig. 12a, Fig. 12b, Fig. 12c) aufweisen.

24. Herstellungsverfahren nach Anspruch 23,
**dadurch gekennzeichnet, dass**
die Materialschicht (21) als eine lichtempfindliche Photopolymer-Schicht ausgebildet ist.

25. Herstellungsverfahren nach Anspruch 23 oder 24,
**dadurch gekennzeichnet, dass**
die erste und zweite Beleuchtungswelle durch Beugung einer ebenen monochromatischen Ursprungs-Beleuchtungswelle an einer Phasen- oder Amplitudenmaske in die 1. und -1. Ordnung erzeugt werden.

## Claims

1. Security feature having a structure comprising an optically active microstructure (1) and an information structure (33) arranged underneath the latter, in which information is introduced into the information structure (33) as irreversible changes and the microstructure (1) has at least a first (7) and a second (6) microstructure region designed to be transparent, the first microstructure region (7) bearing a diffraction structure (5) and the second microstructure region (6) being free of any diffraction structure, and the structure having an efficiency which specifies how much of the information in the information structure (33) can be seen through the optically active microstructure (1) at an optimal viewing angle (+θ₁, -θ₁),
**characterized in that** the efficiency is greater than or equal to 90%, and the information from various viewing angles (+θ₁, -θ₁) onto the security feature has a different information content (Fig. 12a, Fig. 12b, Fig. 12c), various items of information in each case being introduced into various information structure regions (8, 9) in the information structure (33), a first information structure region (8) being assigned to a first information content (Fig. 12b) and a first viewing angle (+θ₁), and a second information structure region (9) being assigned to a second information content (Fig. 12c) and a second viewing angle (-θ₁).

2. Security feature according to Claim 1,
**characterized in that** the efficiency results substantially from taking into account light reflection at interfaces and a diffraction efficiency of the first microstructure region (7) bearing a diffraction structure (5).

3. Security feature according to Claim 1 or 2,
**characterized in that** the information structure (33) is formed from a plurality of films (16, 17, 18, 19) arranged above one another.

4. Security feature according to one of Claims 1 to 3,
**characterized in that** the optically active microstructure (1) has a film (19) similar to a hologram.

5. Security feature according to Claim 3 or 4,
**characterized in that** the information is introduced into at least one of the films (16, 17, 18, 19).

6. Security feature according to one of Claims 1 to 5,
**characterized in that** the first microstructure region (7) and the second microstructure region (6) are arranged adjacent to one another in the form of strips.

7. Security feature according to one of Claims 1 to 6,
**characterized in that** the first and second microstructure regions (7, 6) and the first and second information structure regions (8, 9) all have the same width (p), and the information structure regions (8, 9) are offset by half the width (p/2) with respect to the microstructure regions (7, 6).

8. Security feature according to Claim 7,
**characterized in that** the width (p) is around 45.5 µm.

9. Security feature according to one of Claims 1 to 8,
**characterized in that** between the microstructure (1) and the information structure (33) there is arranged a layer whose thickness (D, 10) is around 100 µm.

10. Security feature according to one of Claims 1 to 9,
**characterized in that** the diffraction structure (5) is formed as a grating structure.

11. Security feature according to Claim 10,
**characterized in that** the grating structure is formed as web elements (27) which are spaced apart from one another in the manner of a comb with interspaces (26, 28) and are parallel to one another.

12. Security feature according to Claim 10 or 11,
**characterized in that** a cross section of a web element (27, 29, 30) is constructed in accordance with a form from the group comprising: rectangular form, sinusoidal form, elliptical form, oval form and sawtooth form.

13. Data carrier having a security feature according to one of Claims 1 to 12.

14. Method for the production of a data carrier having a security feature according to one of Claims 1 to 12, in which
- a structure is formed from an optically active microstructure (1) and an information structure (33) arranged under the latter, and
- in the microstructure (1), at least a first (7) and a second (6) microstructure region being designed to be transparent, the first microstructure region (7) being provided with a diffraction structure (5) and the second microstructure region (6) remaining free of any diffraction structure,
**characterized in that**
- various items of information are introduced into the information structure (33) as irreversible changes by means of laser engraving in each case in various information structure regions (8, 9),
- a first information structure region (8) is assigned to a first information content (Fig. 12b) and a first viewing angle (+θ₁), and a second information structure region (9) is assigned to a second information content (Fig. 12c) and a second viewing angle (-θ₁), and
- a material layer (21) is applied to the information structure (33),
- the diffraction structure (5) is embossed into the material layer (21) by means of an embossing punch, and
- the material layer (21) having the diffraction structure (5) is covered by a layer (22) in such a way that a smooth surface is formed,
- the structure being formed with an efficiency of greater than or equal to 90%, which specifies how much of the information in the information structure (33) can be seen through the optically active microstructure (1) at an optimal viewing angle (+θ₁, -θ₁), and
- the information from various viewing angles (+θ₁, -θ₁) onto the security feature having a different information content (Fig. 12a, Fig. 12b, Fig. 12c).

15. Production method according to Claim 14,
**characterized in that** the layer (22) has a refractive index (n₂) which differs from the refractive index (n₁) of the material layer (21).

16. Production method according to Claim 14 or 15,
**characterized in that** the diffraction structure (5) is embossed by means of a hot embossing apparatus.

17. Production method according to Claim 14 or 15,
**characterized in that** the material layer (21) is formed as a film (19) similar to a hologram.

18. Production method according to Claim 14 or 15,
**characterized in that** the material layer (21) is formed as a UV-curable lacquer.

19. Production method according to one of Claims 14 to 18,
**characterized in that** the layer (22) is formed as a low-viscosity lacquer, in such a way that the embossed trenches in the material layer (21) are filled.

20. Production method according to one of Claims 14 to 19,
**characterized in that** the layer (22) is formed as a dielectric layer.

21. Production method according to one of Claims 14 to 18,
**characterized in that** the layer (22) is formed as a lacquer or adhesive system (24) in such a way that the embossed trenches in the material layer (21) remain free and are sealed.

22. Production method according to one of Claims 14 to 21,
**characterized in that** the material layer (21) is already provided with a further dielectric layer (22a) before being embossed.

23. Method for the production of a data carrier having a security feature according to one of Claims 1 to 10, in which
- a structure is formed from an optically active microstructure (1) and an information structure (33) arranged under the latter, and
- in the microstructure (1), at least a first (7) and a second (6) microstructure region being designed to be transparent, the first microstructure region (7) being provided with a diffraction structure (5) and the second microstructure region (6) remaining free of any diffraction structure,
**characterized in that**
- various items of information are introduced into the information structure (33) as irreversible changes by means of laser engraving in each case in various information structure regions (8, 9),
- a first information structure region (8) is assigned to a first information content (Fig. 12b) and a first viewing angle (+θ₁), and a second information structure region (9) is assigned to a second information content (Fig. 12c) and a second viewing angle (-θ₁), and
- the diffraction structure (5) is introduced into a material layer (21) as a volume transmission hologram, by the material layer (21) being formed as a light-sensitive layer and a first and second illumination wave being brought to interference in the material layer (21) in such a way that, in regions of the constructive interference of the illumination waves, a refractive index of the material layer (21) is changed, so that the refractive index modulation that is produced forms the diffraction structure (5), and
- the material layer (21) is applied to the information structure (33) before or after the introduction of the diffraction structure (5),
- the structure being formed with an efficiency of greater than or equal to 90%, which specifies how much of the information in the information structure (33) can be seen through the optically active microstructure (1) at an optimal viewing angle (+θ₁, -θ₁), and
- the information from various viewing angles (+θ₁, -θ₁) onto the security feature having a different information content (Fig. 12a, Fig. 12b, Fig. 12c).

24. Production method according to Claim 23,
**characterized in that** the material layer (21) is formed as a light-sensitive photopolymer layer.

25. Production method according to Claim 23 or 24,
**characterized in that**
the first and second illumination waves are generated by means of diffraction of a planar monochromatic original illumination wave into the 1st and -1st order at a phase mask or amplitude mask.

## Revendications

1. Caractéristique de sécurité comprenant une structure constituée d'une microstructure (1) efficace optiquement et d'une structure (33) d'information sous-jacente, dans laquelle des informations sont introduites dans la structure (33) d'informations sous la forme de modifications irréversibles et la microstructure (1) a au moins une première (7) et une deuxième (6) zones de microstructure transparentes, la première zone (7) de microstructure portant une structure (7) de diffraction et la deuxième zone (6) de microstructure étant exempte d'une structure de diffraction et la structure a une efficacité qui indique combien de l'information dans la structure (33) d'information peut être vu sous un angle (+ϑ₁, -ϑ₁) de vue le meilleur par la microstructure (1) efficace optiquement,
**caractérisé en ce que**
l'efficacité est supérieure ou égale à 90% et les informations provenant des divers angles (+ϑ₁, -ϑ₁) de vue sur la caractéristique de sécurité ont des contenus informationnels différents (fig 12a, fig 12b, fig 12c), des informations différentes étant introduites respectivement dans diverses zones (8, 9) de la structure (33) d'information, une première zone (8) de la structure d'information étant associée à un premier contenu informationnel (fig 12b) et à un premier angle (+ϑ₁) de vue et une deuxième zone (9) de structure d'informations étant associée à un deuxième contenu informationnel (fig 12c) et à un deuxième angle (-ϑ₁) de vue.

2. Caractéristique de sécurité suivant la revendication 1,
**caractérisé en ce que**
l'efficacité est obtenue essentiellement en tenant compte de la réflexion de la lumière sur des interfaces et d'un rendement de diffraction de la première zone (7) de la microstructure portant une structure (5) de diffraction.

3. Caractéristique de sécurité suivant la revendication 1 ou 2,
**caractérisé en ce que**
la structure (33) d'information est formée de plusieurs feuilles (16, 17, 18, 19) superposées.

4. Caractéristique de sécurité suivant l'une des revendications 1 à 3,
**caractérisé en ce que**
la microstructure (1) efficace optiquement comprend une feuille (19) analogue à un hologramme.

5. Caractéristique de sécurité suivant l'une des revendications 3 ou 4,
**caractérisé en ce que**
les informations sont introduites dans au moins l'une des feuilles (16, 17, 18, 19).

6. Caractéristique de sécurité suivant l'une des revendications 1 à 5,
**caractérisé en ce que**
la première zone (7) de microstructure et la deuxième zone (6) de microstructure sont disposées en forme de bande en étant voisines l'une de l'autre.

7. Caractéristique de sécurité suivant l'une des revendications 1 à 6,
**caractérisé en ce que**
la première et la deuxième zone (7, 6) de microstructure et la première et la deuxième zone (8, 9) de structure d'information ont toutes la même largeur (p), et les zones (8, 9) de structure d'information sont décalées de la demi largeur (p/2) par rapport aux zones (7, 6) de microstructure.

8. Caractéristique de sécurité suivant la revendication 7,
**caractérisé en ce que**
la largeur (p) est de 45,5 µm.

9. Caractéristique de sécurité suivant l'une des revendications 1 à 8,
**caractérisé en ce qu'**
il est interposé entre la microstructure (1) et la structure (33) d'information une couche dont l'épaisseur (D, 10) est de 100 µm.

10. Caractéristique de sécurité suivant l'une des revendications 1 à 9,
**caractérisé en ce que**
la structure (5) de diffraction est sous la forme d'une structure de réseau.

11. Caractéristique de sécurité suivant la revendication 10,
**caractérisé en ce que**
la structure de réseau est sous la forme d'éléments (27) de barrette séparés les uns des autres par des espaces (26, 28) intermédiaires et parallèles entre eux.

12. Caractéristique de sécurité suivant la revendication 10 ou 11,
**caractérisé en ce qu'**
une section transversale d'un élément (27, 29, 30) de barrette est constituée sous une forme choisie dans le groupe constitué par la forme rectangulaire, la forme sinusoïdale, la forme en ellipse, la forme ovale et la forme en dent de scie.

13. Support de données ayant une caractéristique de sécurité suivant l'une des revendications 1 à 12.

14. Procédé de production d'un support de données ayant une caractéristique de sécurité suivant l'une des revendications 1 à 12, dans lequel
- on forme une structure constituée d'une microstructure (1) efficace optiquement et d'une structure (33) d'information sous-jacente et dans la microstructure au moins une première (7) et une deuxième (6) zone de microstructure sont constituées en étant transparentes, la première zone (7) de microstructure étant munie d'une structure (5) de diffraction et la deuxième zone (6) de microstructure restant exempte de structure de diffraction,
**caractérisé en ce que**
- l'on introduit diverses informations sous la forme de modifications irréversibles au moyen d'une gravure laser respectivement dans diverses zones (8, 9) de la structure (33) d'information, dans lequel
- on associe une première zone (8) de structure d'informations à un premier contenu informationnel (fig 12b) et à un premier angle (+ϑ₁) de vue et une deuxième zone (9) de structure d'information à un deuxième contenu informationnel (fig 12c) et à un deuxième angle (-ϑ₁) de vue, et
- on dépose une couche (21) de matière sur la structure (33) d'information,
- on imprime la structure (5) de diffraction au moyen d'un poinçon d'impression dans la couche (21) de matière, et
- on recouvre la couche (21) de matière ayant la structure (5) de diffraction d'une couche (22) de manière à former une surface lisse, dans lequel,
- on forme la structure en lui donnant une efficacité supérieure ou égale à 90%, qui indique combien de l'information dans la structure (33) d'information peut être vue sous un angle (+ϑ₁, -ϑ₁) de vue le meilleur à travers la microstructure (1) efficace optiquement, et
- les informations provenant des divers angles (+ϑ₁, -ϑ₁) de vue sur la caractéristique de sécurité ont des contenus informationnels (fig 12a, fig 12b, fig 12c) différents.

15. Procédé de fabrication suivant la revendication 14,
**caractérisé en ce que**
la couche (22) a un indice (n₂) de réfraction, qui est différent de l'indice (n₁) de réfraction de la couche (21) de matière.

16. Procédé de fabrication suivant la revendication 14 ou 15,
**caractérisé en ce que**
l'on imprime la structure (5) de diffraction au moyen d'un dispositif d'impression à chaud.

17. Procédé de fabrication suivant la revendication 14 ou 15,
**caractérisé en ce que**
la couche (21) de matière est constituée d'une feuille (19) analogue à un hologramme.

18. Procédé de fabrication suivant la revendication 14 ou 15,
**caractérisé en ce que**
la couche (21) de matière est constituée d'un vernis pouvant durcir sous la lumière ultraviolette.

19. Procédé de fabrication suivant l'une des revendications 14 à 18,
**caractérisé en ce que**
la couche (22) est constituée sous la forme d'un vernis de viscosité basse, de façon à combler des sillons imprimés dans la couche (21) de matière.

20. Procédé de fabrication suivant l'une des revendications 14 à 19,
**caractérisé en ce que**
la couche (22) est constituée sous la forme d'une couche diélectrique.

21. Procédé de fabrication suivant l'une des revendications 14 à 18,
**caractérisé en ce que**
la couche (22) est constituée sous la forme d'un vernis ou d'un système (24) de colle de façon à laisser dégager et à sceller les sillons imprimés dans la couche (21) de matière.

22. Procédé de fabrication suivant l'une des revendications 14 à 21,
**caractérisé en ce que**
la couche (21) de matière est munie avant une impression déjà d'une autre couche (22a) diélectrique.

23. Procédé de production d'un support de données ayant une caractéristique de sécurité suivant l'une des revendications 1 à 10, dans lequel
- on forme une structure constituée d'une microstructure (1) efficace optiquement et d'une structure (33) d'information sous-jacente et dans la microstructure au moins une première (7) et une deuxième (6) zone de microstructure sont constituées en étant transparentes, la première zone (7) de microstructure étant munie d'une structure (5) de diffraction et la deuxième zone (6) de microstructure restant exempte de structure de diffraction,
**caractérisé en ce que**
- on introduit diverses informations sous la forme de modifications irréversibles au moyen d'une gravure laser respectivement dans diverses zones (8, 9,) de la structure (33) d'information, dans lequel
- une première zone (8) de structure d'information est associée à un premier contenu informationnel (fig 12b) et à un premier angle (+ϑ₁) de vue et une deuxième zone (9) de structure d'information est associée à un deuxième contenu informationnel (fig 12c) et à un deuxième angle (-ϑ₁), et
- la structure (5) de diffraction est introduite sous la forme d'un hologramme de transmission en volume dans une couche (21) de matière, en constituant la couche (21) de matière sous la forme d'une couche sensible à la lumière et en faisant interférer dans la couche (21) de matière, une première onde et une deuxième onde d'éclairage de façon à modifier, dans les zones de l'interférence construite des ondes d'éclairage, un indice de réfraction de la couche (21) de matière de façon que la modulation d'indice de réfraction forme la structure (5) de diffraction, et
- on dépose la couche (21) de matière sur la structure (33) d'information avant ou après l'introduction de la structure (5) de diffraction, dans lequel
- on donne à la structure une efficacité supérieure ou égale à 90%, qui indique combien de l'information dans la structure (33) d'information peut être vue sous un angle (+ϑ₁, -ϑ₁) de vue le meilleur à travers la microstructure (1) efficace optiquement, et
- les informations provenant des divers angles (+ϑ₁, -ϑ₁) de vue sur la caractéristique de sécurité ont des contenus informationnels (fig 12a, fig 12b, fig 12c) différents.

24. Procédé de production suivant la revendication 23,
**caractérisé en ce que**
la couche (21) de matière est constituée d'une couche en photopolymère sensible à la lumière.

25. Procédé de production suivant la revendication 23 ou 24,
**caractérisé en ce que**
l'on produit la première et la deuxième onde d'éclairage par diffraction d'une onde d'éclairage d'origine plane et monochromatique sur un masque de phase ou un masque d'amplitude d'ordre 1 et -1.
